# EUROPEAN PATENT SPECIFICATION

(11) **EP 2 634 836 B1**
(45) Date of publication and mention of the grant of the patent: **01.10.2014**
(21) Application number: 13156825.5
(22) Date of filing: 26.02.2013
(51) Int. Cl.: H01M 2/14, H01M 2/16

(54) **Separator including coating layer of inorganic and organic mixture, and battery including the same**
Separator mit Beschichtungsschicht aus einer anorganischen und organischen Mischung, und Batterie damit
Séparateur comprenant une couche de revêtement d'un mélange inorganique et organique et batterie comprenant celui-ci

(30) Priority: 29.02.2012 KR 20120021220
(43) Date of publication of application: 04.09.2013
(73) Proprietor: Cheil Industries Inc., Gumi-si Gyeongsangbuk-do 730-030 (KR)
(72) Inventor: Hong, Ki Chul, 437-711 Uiwang-si, Gyeonggi-do (KR); Park, Myung Kook, 437-711 Uiwang-si, Gyeonggi-do (KR); Doh, Jae Goo, 437-711 Uiwang-si, Gyeonggi-do (KR); Chung, Jun Ho, 437-711 Uiwang-si, Gyeonggi-do (KR); Lim, Geon Ja, 437-711 Uiwang-si, Gyeonggi-do (KR)
(74) Representative: Michalski Hüttermann & Partner Patentanwälte mbB

(56) References cited:
- EP-A1- 1 955 756
- EP-A1- 2 133 387
- US-A1- 2008 102 361

## Description

### Field of the Invention

The present invention relates to a separator including a coating layer of an organic and inorganic mixture, and a battery including the same.

### Description of the Related Art

A separator for an electrochemical battery refers to a middle layer disposed inside a battery to isolate a positive electrode and a negative electrode from each other while maintaining ionic conductivity to permit charge and discharge of the battery. The separator acts as a safety device for preventing the battery from overheating.

Technical development of and increasing demand for mobile devices have rapidly increased demand for rechargeable batteries as an energy source. In particular, many studies have focused on developing a lithium rechargeable battery having high energy density and discharge voltage, and the commercialization and broad use of various lithium rechargeable batteries have been realized to some degree.

Meanwhile, with increasing attention given to environment issues, various studies have been made to develop electric cars and hybrid cars for replacement of fossil fuel-based cars such as gasoline cars and diesel cars, which are regarded as one major cause of air pollution. Many studies have been made to employ a lithium rechargeable battery as a power source for such electric cars, hybrid cars, and the like, and commercialization and use thereof have also been realized to some degree.

Recently, in order to improve portability of electronic devices such as mobile devices and notebook computers, electrochemical batteries have been developed to have a lighter and thinner structure while ensuring high output and high capacity for use in electric cars and the like. Consequently, it is necessary for a separator of a battery to have a slim thickness and a light weight while ensuring high adhesion and shape stability based on high heat resistance in order to produce high capacity batteries.

EP 1 955 756 A1 refers to a flexible, ceramic membrane useful as a separator for batteries, especially lithium batteries, the membrane containing a polymeric non-woven; a ceramic coating on and in the non-woven; wherein the ceramic coating comprises at least one oxide selected from the group consisting of Al₂O₃, TiO₂, ZrO₂, BaTiO₃, SiO₂, and mixtures thereof; wherein the coating comprises at least two fractions of oxides selected from the group consisting of Al₂O₃, TiO₂, ZrO₂, BaTiO₃, SiO₂, and mixtures thereof; a first ceramic fraction of the coating having been obtained from a sol; a second fraction of the coating comprising particles having an average particle size in the range from 200 nm to 5 µm; wherein the first fraction is present as a layer on the particles of the second fraction; the coating comprising from 0.1 to 50 parts by mass of the first fraction; the coating comprising from 5 to 99 parts by mass of the second fraction; and a network comprising silicon or zirconium; wherein the silicon in the network bonds via oxygen atoms to the oxides of the ceramic coating, via organic radicals to the surface of the polymeric non-woven and via at least one carbon chain to a further silicon; and wherein the coating is pinhole free.

EP 2 133 387 A1 refers to a porous film comprising a heat-resistant resin and two or more fillers, wherein a value of D2/D1 is 0.15 or less where among values each obtained by measuring the average particle diameter of particles that constitute one of the two or more fillers, the largest value is let be D1 and the second largest value is let be D2.

US 2008/102361 A1 refers to an electrode assembly and a secondary battery with the same, more particularly to the electrode assembly which includes an anode plate, a cathode plate, and a separator disposed between the anode plate and the cathode plate, wherein the separator includes a ceramic separator including a ceramic filler which is formed by mixing two groups of particles of the same material, but with a different diameter. The particles with the comparatively smaller diameter are disposed between the particles with the comparatively greater diameter.

For example, Korean Patent No. 0775310 discloses a separator which includes a coating layer of an organic/inorganic mixture formed on one or both sides of a base film by coating inorganic particles and an organic binder polymer thereon.

This separator including the coating layer of the organic/inorganic mixture is evaluated to achieve relatively stable prevention of short circuit between electrodes even at high temperatures.

However, in order to allow a porous active layer of the organic/inorganic mixture coated on the separator to suppress thermal shrinkage of the polyolefin porous base film, it is necessary for the coating layer to contain a sufficient amount of the inorganic particles, which generally have a single average particle diameter in the related art. However, the use of inorganic particles having a single average particle diameter provides a large porosity between inorganic particles, thereby reducing the loading amount of a coating composition and the coating density in a coating layer as compared with the thickness of the coating layer, and thus making it difficult to achieve sufficient thermal conductivity.

### Summary of the Invention

The present invention has been conceived to solve such problems of the related art, and an aspect of the present invention is to provide a separator for a battery, which includes a coating layer formed on a polyolefin porous separator using different types of inorganic particles having different average particle sizes to have a high loading amount of a coating composition and a high density in the coating layer and to provide excellent thermal conductivity by reducing porosity between the inorganic particles in the coating layer.

Another aspect of the present invention is to provide a separator for a battery, which includes a coating layer containing a polyvinylidene fluoride homopolymer having a weight average molecular weight of 1,000,000 g/mol or more and a polyvinylidene fluoride-hexafluoropropylene copolymer having a weight average molecular weight of 800,000 g/mol or less in a binder polymer, thereby providing excellent adhesive strength.

In accordance with one aspect, the present invention provides a porous separator including a polyolefin porous base film, and a coating layer formed on one or both sides of the base film, wherein the coating layer includes inorganic particles, and the inorganic particles include first inorganic particles having an average particle size ranging from 150 nm to 600 nm, and second inorganic particles having an average particle size ranging from 5 nm to 90 nm, and the separator has a thermal conductivity of 0.3 W/mk or more.

In accordance with another aspect, the present invention provides an electrochemical battery, which includes one of the aforementioned separators, a positive electrode, a negative electrode, and an electrolyte.

In accordance with a further aspect, the electrochemical battery is a lithium rechargeable battery.

### Detailed description of the Invention

Embodiments of the present invention will be described in more detail. Descriptions of details apparent to those skilled in the art will be omitted herein.

One aspect of the present invention provides a porous separator including a polyolefin porous base film, and a coating layer formed on one or both sides of the base film, wherein the coating layer includes inorganic particles, and the inorganic particles include first inorganic particles having an average particle size ranging from 150 nm to 600 nm, and second inorganic particles having an average particle size ranging from 5 nm to 90 nm, and the separator has a thermal conductivity of 0.3 W/mk or more.

Definition: Molecular weight is a measure of the sum of the atomic weights of the atoms in a molecule.

Definition: Particle size is measured according to a method of a laser scattering. Definition: Density is calculated by Expression 1.

### [Expression 1]

Density = (total weight of a separator per unit area- weight of a base film per unit area)/ unit area.

In Expression 1, the total weight of a separator is an weight of a separator including coating layer, and the total weight of a separator and the weight of a base film are measured by using a Precision Balance.

Further, in all physical data within the specification, the temperature if not otherwise stated is room temperature.

The inorganic particles may be independently selected from the group consisting of different types of inorganic particles having different average particle sizes, in which smaller inorganic particles (second inorganic particles) may be selected from the group consisting of inorganic particles having an average particle size ranging from 5 nm to 90 nm, preferably an average particle size ranging from 20 nm to 70 nm, and larger inorganic particles (first inorganic particles) may be selected from the group consisting of inorganic particles having an average particle size ranging from 150 nm to 600 nm, preferably from 400 nm to 600 nm, more preferably about 500 nm.

Within this size range, the inorganic particles can prevent deterioration in coating processibility and dispersion within a coating solution, deterioration in mechanical properties, and increase in electric resistance by allowing suitable adjustment of the coating layer. Further, pores of a suitable size can be created in the coating layer, thereby lowering the likelihood of internal short circuit upon charge and discharge of the battery.

According to experiments of the present invention, when alumina particles having an average particle size of 500 nm are used alone as the inorganic particles, the separator has a thermal conductivity of 0.26 W/mk, and when alumina particles having an average particle size of 100 nm are used alone as the inorganic particles, the separator has a thermal conductivity of 0.27 W/mk. On the other hand, when the separator includes a coating layer containing inorganic particles having different average particle sizes, the separator has a good thermal conductivity of 0.3 W/mk or more.

The mixing ratio of the inorganic particles (e.g, alumina) having different inorganic particle sizes for providing the maximum heat conductivity differs according to the average particle sizes of the inorganic particles. For example, when larger inorganic particles have an average particle size of about 500 nm, the amount of smaller inorganic particles in the mixture of inorganic organic particles having different average particle sizes increases with increasing average particle size of the smaller inorganic particles, as selected within the range of 20 nm to 90 nm, in order to provide maximum heat conductivity.

For optimal mixing of the inorganic particles, when first inorganic particles having an average particle size of about 500 nm and second inorganic particles having an average particle size of about 20 nm are used, the first inorganic particles and the second inorganic particles preferably are mixed in a ratio (by weight) from 95:5 to 99:1, more preferably are mixed in a ratio about 97:3. When first inorganic particles having an average particle size of 500 nm and second inorganic particles having an average particle size of 50 nm are used, the first inorganic particles and the second inorganic particles preferably are mixed in a ratio from 95:5 to 97:3, more preferably are mixed in a ratio about 95:5, and when first inorganic particles having an average particle size of 500 nm and second inorganic particles having an average particle size of 70 nm are used, the first inorganic particles and the second inorganic particles preferably are mixed in a ratio more than 91:9 to 93:7, more preferably are mixed in a ratio about 93:7.

According to the present invention, the binder polymer may include: a) a polyvinylidene fluoride homopolymer having a weight average molecular weight of 1,000,000 g/mol or more; and b) a polyvinylidene fluoride-hexafluoropropylene copolymer having a weight average molecular weight of 800,000 g/mol or less.

Although not particularly limited to a certain ratio in a coating agent of the organic and inorganic mixture, the coating agent may contain: a) 70 to 90 wt% of the inorganic particles; and b) 10 to 30 wt% of the binder polymer.

Within this range, the inorganic particles can provide thermal stability, that is, heat resistance and heat dissipation, the organic binder can provide sufficient improvement of adhesion, and the coating layer can be formed in a relatively flat shape by preventing deterioration in coating processibility and dispersion of the coating agent.

Specifically, within this content range, the organic binder can prevent excessive reduction in amount of the inorganic particles while sufficiently improving adhesion of the coating layer, thereby providing suitable heat dissipation and heat resistance.

According to the present invention, the polyvinylidene fluoride homopolymer may have a weight average molecular weight of 1,000,000 g/mol or more. Thus, since this polyvinylidene fluoride homopolymer is unlikely to be dissolved in a low boiling point solvent, such as acetone, it is desirable that the polyvinylidene fluoride homopolymer be dissolved in a solvent such as DMF in practical use. When the remaining amount of the solvent is lowered to a predetermined range or less, preferably, to 100 ppm or less, in a finally dried coating layer, it is possible to prevent deterioration in adhesion of the coating layer due to excess remaining solvent.

Although a solvent, such as DMF and the like, which has a relatively high boiling point, can be insufficiently dried upon drying after coating, it is possible to prevent an excess of the solvent from remaining on the surface of the separator through suitable adjustment of drying conditions.

In addition, when the inorganic particles are present within the aforementioned range in the coating layer, it is possible to achieve efficient suppression of thermal shrinkage of the separator through sufficient heat dissipation while securing the organic binder in a desired amount or more to achieve strong adhesion.

The coating agent of the organic and inorganic mixture contains the polyvinylidene fluoride homopolymer and the polyvinylidene fluoride-hexafluoropropylene copolymer as organic binder polymer resins, and the inorganic particles, and may further contain a suitable solvent and other additives.

In preparation of the coating agent used in the present invention, the polyvinylidene fluoride homopolymer, the polyvinylidene fluoride-hexafluoropropylene copolymer, and the inorganic particles may be dissolved in suitable solvents, respectively, and mixed with each other.

For example, the polyvinylidene fluoride homopolymer may be prepared as a polymer solution, which is obtained by dissolving the polyvinylidene fluoride homopolymer in dimethylformamide (DMF). The polyvinylidene fluoride-hexafluoropropylene copolymer may be prepared as a polymer solution, which is obtained by dissolving the polyvinylidene fluoride-hexafluoropropylene copolymer in acetone, and the inorganic particles may be prepared as an inorganic dispersant, which is obtained by dissolving the inorganic particles in acetone.

The polymer solutions and the inorganic dispersant may be mixed in a suitable solvent to prepare a coating agent.

Examples of solvents used in the present invention may include ketones such as acetone, or alcohols such as methanol, ethanol, isopropyl alcohol, and the like, without being limited thereto. These solvents provide an advantage of allowing easy removal upon drying after coating.

According to the present invention, the coating agent may be prepared in the form of a mixture obtained by sufficiently stirring the polymer solutions, the inorganic dispersant and the solvent using a ball mill, a bead mill or a screw mixer.

The separator including the coating layer according to the present invention is prepared by coating the coating agent on one or both sides of a polyolefin base film, followed by drying the coating agent.

Any typical coating method known in the art may be used without limitation in order to coat the coating agent on the polyolefin base film. For example, dip coating, die coating, roll coating, or comma coating may be used. These coating processes may be used alone or in combination thereof.

More preferably, the coating layer of the separator is formed by dip coating.

According to the present invention, the coating layer formed on the separator is subjected to drying. Here, any typical drying process known in the art may be used without limitation.

Drying of the coating layer may be performed by, for example, hot air blowing.

Drying of the coating layer is preferably performed at a temperature ranging from 70°C to 120°C. Within this temperature range, drying of the coating layer can be completed within a suitable time. In other words, this temperature range provides an advantage of forming a relatively smooth coating layer by preventing surface irregularity resulting from rapid drying without requiring a long drying time.

According to the present invention, the coating layer of the separator may contain a coating composition loading amount of 5 g/m² to 10 g/m², and have a thickness of 1 µm to 15 µm, preferably 1 µm to 7 µm. The term of "a coating composition loading amount" means a weight per unit area of the coating layer. Within this thickness range, the coating layer can provide excellent thermal stability and adhesion, and can suppress increase in internal resistance of the battery by preventing excessive increase in thickness of the separator.

According to the present invention, the ratio of the inorganic particles having an average particle size of 150 nm to 600 nm to the inorganic particles having an average particle size of 5 nm to 90 nm may range from 99.9% : 0.1% to 70% : 30% based on the total amount of the inorganic particles.

According to the present invention, the ratio of the inorganic particles having an average particle size of 150 nm to 600 nm to the inorganic particles having an average particle size of 5 nm to 90 nm may range from 99% : 1% to 93% : 7% based on the total amount of the inorganic particles.

An optimal ratio of two types of inorganic particles having different average particle sizes is determined according to the particles sizes of inorganic particles selected. According to embodiments of the invention, it can be seen that, when larger inorganic particles have an average particle size of 500 nm, the weight ratio of smaller inorganic particles in the mixture of the inorganic particles having different average particle sizes increases with increasing average particle size of the smaller inorganic particles in order to maximize thermal conductivity.

In one embodiment of the present invention, the inorganic particles of the polyolefin porous separator are alumina (Al₂O₃) particles.

In another embodiment of the present invention, the polyolefin porous base film of the polyolefin porous separator may be selected from the group consisting of a polyethylene monolayer film, a polypropylene monolayer film, a polyethylene/polypropylene bilayer film, a polypropylene/polyethylene/polypropylene triple-layer film, and a polyethylene/polypropylene/polyethylene triple-layer film.

The polyolefin base film preferably has a thickness of 1 µm to 40 µm, more preferably 1 µm to 25 µm. Within this thickness range of the polyolefin base film, the separator can be formed to a suitable thickness, thereby preventing short circuit of the positive electrode and the negative electrode while improving stability of the battery. If the thickness of the separator exceeds this range, there is a problem of increase in internal resistance of the battery.

In another embodiment of the present invention, the separator may have a thermal shrinkage of 15% or less. Here, any typical method known in the art may be used without limitation to measure the thermal shrinkage of the separator. For example, the thermal shrinkage of the separator can be measured as follows: a prepared separator is cut into a size of about 5 cm × about 5 cm and left in a chamber at 150°C for 1 hour, followed by measuring degrees of shrinkage in MD and TD directions to calculate thermal shrinkage. When the porous separator including the coating layer of the organic and inorganic mixture according to the present invention is applied to an electrochemical battery, the coating layer may exhibit an adhesive strength of 0.0981 N/cm² (10 gf/cm²) or more to electrodes of the battery. Within this range, the coating layer and the electrodes can be sufficiently strongly attached together to suppress thermal shrinkage of the separator, thereby preventing short circuit in the positive and negative electrodes. In addition, in production of high output large capacity batteries, the separator improves stability and lifespan of the batteries.

Here, any typical method known in the art may be used to measure adhesive strength between the coating layer and the electrodes.

For example, the adhesive strength between the coating layer and the electrodes can be measured as follows: a prepared separator of the present invention is placed between both electrodes to prepare a battery stack of positive electrode/separator/negative electrode, which in turn is inserted into an aluminum pouch. Then, with an electrolyte injected into the aluminum pouch, the aluminum pouch is sealed and formed into a single-plate cell, which in turn is subjected to a force of 980 N/cm² (100 kgf/cm²) for 20 seconds at 50°C and left for 12 hours. Next, after disassembling each of the single-plate cells, the battery stack of the positive electrode, the separator and the negative electrode bonded to each other is cut into a size of 1.5 cm (MD) × 7 cm (TD) and attached to a glass plate using a transparent double-sided tape (3M), followed by measuring adhesive strength between the electrodes and the separator using a tensile strength tester (UTM; Universal Test Machine).

In accordance with another aspect, the present invention provides an electrochemical battery, which includes the separator, a positive electrode, a negative electrode, and an electrolyte.

In one embodiment of the present invention, the electrochemical battery is a lithium rechargeable battery.

According to the present invention, the lithium rechargeable battery may include a lithium metal rechargeable battery, a lithium ion rechargeable battery, a lithium polymer rechargeable battery, a lithium ion polymer rechargeable battery, and the like.

Any typical method known in the related art can be used without limitation in manufacture of the electrochemical battery according to the present invention.

For example, the electrochemical battery according to the present invention may be manufactured by placing the polyolefin separator including the coating layer of the organic and inorganic mixture according to the present invention between a positive electrode and a negative electrode, and filling a space therebetween with an electrolyte.

The electrodes of the electrochemical battery according to the present invention may be prepared in the form of assemblies of electrode active materials and current collectors, which are combined by a typical method used in the art.

As the positive active material of the battery according to the present invention, any positive electrode active material known in the art may be used without limitation. Specifically, the positive electrode includes a positive electrode active material, which allows reversible intercalation and deintercalation of lithium ions. Examples of such positive electrode active materials may include composite metal oxides of lithium and at least one metal selected from cobalt, manganese and nickel, without being limited thereto. The amount of lithium dissolved between metal elements may be determined in various ways. In addition to these metals, the positive electrode active material may further include an element selected from the group consisting of Mg, Al, Co, Ni, K, Na, Ca, Si, Ti, Sn, V, Ge, Ga, B, As, Zr, Mn, Cr, Fe, Sr, V, and rare earth metal elements. Preferably, the positive electrode is a composite metal oxide of lithium and a metal selected from the group consisting of Co, Ni, Mn, Al, Si, Ti and Fe, more preferably lithium cobalt oxide (LCO, for example, LiCoO₂), lithium nickel cobalt manganese oxide (NCM, for example, Li[Ni(x)Co(y)Mn(z)]O₂), lithium manganese oxide (LMO, for example, LiMn₂O₄, LiMnO₂), lithium iron phosphate (LFP, for example, LiFePO₄), lithium nickel oxide (LNO, for example, LiNiO₂), and the like.

The negative electrode includes a negative electrode active material, which allows reversible intercalation and deintercalation of lithium ions. Examples of such negative electrode active materials include crystalline or amorphous carbon, or carbonous negative electrode active materials of carbon composites (thermally decomposed carbon, coke, graphite), combusted organic polymer compounds, carbon fibers, tin oxide compounds, lithium metals, or alloys of lithium and other elements. Examples of amorphous carbon may include hard carbon, coke, mesocarbon microbead (MCMB) baked at 1500°C, mesophase pitch-based carbon fiber (MPCF) baked at 1500°C, and the like. Examples of crystalline carbon may include graphite materials, specifically natural graphite, graphitized coke, graphitized MCMB, graphitized MPCF, and the like. The negative electrode is preferably a crystalline or amorphous carbon electrode.

The positive electrode or negative electrode may be produced by dispersing an electrode active material, a binder, a conductive material, and, if needed, a thickener in a solvent to produce an electrode slurry composition, followed by depositing the slurry composition on an electrode current collector. The positive electrode current collector may be made of aluminum, aluminum alloys, and the like. The negative electrode current collector may be made of copper, copper alloys, and the like. The positive electrode current collector and negative electrode current collector may be prepared in the form of a foil or mesh.

As the current collector of the battery according to the present invention, any typical current collector known in the art may be used without limitation.

Examples of a positive electrode current collector may include aluminum foils, nickel foils, and combination thereof, without being limited thereto.

Examples of a negative electrode current collector may include copper foils, gold foils, nickel foils, copper alloy foils, and thereof, without being limited thereto.

As the electrolyte of the battery according to the present invention, any typical electrolyte for electrochemical batteries known in the art may be used without limitation.

The electrolyte may be obtained through dissolution or dissociation of a salt having, for example, a structure of A⁺ B⁻ in an organic solvent.

Examples of the A⁺ component, that is, cation, may include alkali metal cations such as Ll⁺, Na⁺ or K⁺, and combination thereof, without being limited thereto.

Examples of the B⁻ component, that is, anion, may include PF₆⁻, BF₄⁻, Cl⁻, Br⁻, I⁻, ClO₄⁻ AsF₆', CH₃CO₂⁻, CF₃SO₃⁻, N(CF₃SO₂)₂⁻, C(CF₂SO₂)₃⁻, and combinations thereof, without being limited thereto.

Examples of the organic solvent may include propylene carbonate (PC), ethylene carbonate (EC), diethylcarbonate (DEC), dimethylcarbonate (DMC), dipropylcarbonate (DPC), dimethylsulfoxide, acetonitrile, dimethoxyethane, diethoxyethane, tetrahydrofuran, N-methyl-2-pyrrolidone (NMP), ethylmethylcarbonate (EMC), and γ-butyrolactone, and the like. These may be used alone or in combination thereof.

Next, the present invention will be described in more detail with reference to some examples. However, it should be understood that the following examples are provided for illustration only and are not to be construed in any way as limiting the present invention.

### [Example 1 to 8 and Comparative Example 1 to 4]

### Preparation of separator including coating layer of organic and inorganic mixture

### Example 1

### (1) Preparation of coating agent

1) A polyvinylidene fluoride-hexafluoropropylene ('PVdF-HFP') copolymer (21216, Solvay) having a weight average molecular weight of 700,000 g/mol was added in an amount of 10 wt% to acetone (Daejung Chemicals & Metals), followed by stirring at 25°C for 4 hours using a stirrer to prepare a first polymer solution.
2) A polyvinylidene fluoride ('PVdF') homopolymer (5130, Sovay) of a weight average molecular weight of 1,100,000 g/mol was added in an amount of 10 wt% to DMF (Daejung Chemicals & Metals), followed by stirring at 25°C for 4 hours using a stirrer to prepare a second polymer solution.
3) 24.75% of Al₂O₃ (Nippon Light Metal Company Ltd.) having an average particle size of 500 nm and 0.25% of Al₂O₃ (Nanoarmo) having an average particle size of 20 nm were added to acetone (Daejung Chemicals & Metals), followed by milling at 25°C for 3 hours using a bead mill to prepare an inorganic dispersant.

The prepared first polymer solution, second polymer solution and inorganic dispersant were mixed in a ratio of first polymer solution : second polymer solution : inorganic dispersant : solvent (acetone) = 1:1:3:6, and stirred at 25°C for 2 hours using a power mixer to prepare a coating agent.

### (2) Preparation of separator

The prepared coating agent was coated on both sides of a 9 µm thick polyethylene single base film by dip coating and dried at a temperature of 120°C and a wind speed of 15 m/s for 0.03 hours to prepare a separator.

### Example 2

A separator was prepared in the same manner as in Example 1 except that in 3) of Example 1, Al₂O₃ (Nippon Light Metal Company Ltd.) having an average particle size of 500 nm was added in a ratio of 24.25% and Al₂O₃ (Nanoarmo) having an average particle size of 20 nm was added in a ratio of 0.75%.

### Example 3

A separator was prepared in the same manner as in Example 1 except that in 3) of Example 1, Al₂O₃ (Nippon Light Metal Company Ltd.) having an average particle size of 500 nm was added in a ratio of 23.75% and Al₂O₃ (Nanoarmo) having an average particle size of 20 nm was added in a ratio of 1.25%.

### Example 4

A separator was prepared in the same manner as in Example 1 except that in 3) of Example 1, Al₂O₃ (Nippon Light Metal Company Ltd.) having an average particle size of 500 nm was added in a ratio of 24.25% and Al₂O₃ (Nanoarmo) having an average particle size of 50 nm was added in a ratio of 0.75%.

### Example 5

A separator was prepared in the same manner as in Example 1 except that in 3) of Example 1, Al₂O₃ (Nippon Light Metal Company Ltd.) having an average particle size of 500 nm was added in a ratio of 23.75% and Al₂O₃ (Nanoarmo) having an average particle size of 50 nm was added in a ratio of 1.25%.

### Example 6

A separator was prepared in the same manner as in Example 1 except that in 3) of Example 1, Al₂O₃ (Nippon Light Metal Company Ltd.) having an average particle size of 500 nm was added in a ratio of 24.25% and Al₂O₃ (Nanoarmo) having an average particle size of 70 nm was added in a ratio of 0.75%.

### Example 7

A separator was prepared in the same manner as in Example 1 except that in 3) of Example 1, Al₂O₃ (Nippon Light Metal Company Ltd.) having an average particle size of 500 nm was added in a ratio of 23.75% and Al₂O₃ (Nanoarmo) having an average particle size of 70 nm was added in a ratio of 1.25%.

### Example 8

A separator was prepared in the same manner as in Example 1 except that in 3) of Example 1, Al₂O₃ (Nippon Light Metal Company Ltd.) having an average particle size of 500 nm was added in a ratio of 23.25% and Al₂O₃ (Nanoarmo) having an average particle size of 70 nm was added in a ratio of 1.75%.

### Comparative Example 1

A separator was prepared in the same manner as in Example 1 except that in 3) of Example 1, only Al₂O₃ (Nippon Light Metal Company Ltd.) having an average particle size of 500 nm was added in a ratio of 25% to acetone (Daejung Chemicals & Metals), instead of using both two types of Al₂O₃ particles having an average particle size of 500 nm and an average particle size of 20 nm.

### Comparative Example 2

A separator was prepared in the same manner as in Example 1 except that in 3) of Example 1, only Al₂O₃ (Nanoarmo) having an average particle size of 100 nm was added in a ratio of 25% to acetone (Daejung Chemicals & Metals), instead of using both two types of Al₂O₃ particles having average particle sizes of 500 nm and 20 nm.

### [Measurement of physical properties of separator]

The physical properties of the separators prepared in Examples 1 to 15 and Comparative Examples 1 and 2 were measured by the following methods.
1. Each of the separators was cut into a size of 10 cm (MD) × 20 cm (TD) to prepare specimens, each weight of which was measured using an electronic scale, followed by calculating a coating composition loading amount. Calculation results of the coating composition loading amount are given in g/m².
2. The thickness of the coating layer of each separator was measured using a cross section SEM image and a microcaliper.
3. The density of the coating layer of each separator was obtained by dividing the coating amount obtained in Item 1 by the thickness of the coating layer obtained in Item 2.
4. Each of the separators was cut into a size of 5 cm (MD) × 5 cm (TD) to prepare specimens, which in turn were stacked to 40 plies, followed by measurement of thermal conductivity using a TCi instrument (available from C-Therm).

Measurement results of the physical properties of the separators prepared in Examples 1 to 15 and Comparative Examples 1 and 2 are shown in Table 1.

**Table 1**

| Example/Comparative Example | Ratio of first Al₂O₃ (Particle size) | Ratio of second Al₂O₃ (Particle size) | Coating composition loading amount (g/m²) | Thickness of coating layer (*µ*m) | Density of coating layer (g/cm³) | Thermal conductivity (W/mk) |
|---|---|---|---|---|---|---|
| Example 1 | 99 (D₅₀ = 500nm) | 1 (D₅₀ = 20nm) | 8.3 | 4.1 | 2.024 | 0.30 |
| Example 2 | 97 (D₅₀ = 500nm) | 3 (D₅₀ = 20nm) | 8.2 | 4.0 | 2.050 | 0.34 |
| Example 3 | 95 (D₅₀ = 500nm) | 5 (D₅₀ = 20nm) | 8.5 | 4.2 | 2.024 | 0.31 |
| Example 4 | 97 (D₅₀ = 500nm) | 3 (D₅₀ = 50nm) | 8.3 | 4.1 | 2.024 | 0.30 |
| Example 5 | 95 (D₅₀ = 500nm) | 5 (D₅₀ = 50nm) | 8.6 | 4.0 | 2.150 | 0.40 |
| Example 6 | 97 (D₅₀ = 500nm) | 3 (D₅₀ = 70nm) | 8.3 | 4.1 | 2.024 | 0.32 |
| Example 7 | 95 (D₅₀ = 500nm) | 5 (D₅₀ = 70nm) | 8.6 | 4.2 | 2.048 | 0.36 |
| Example 8 | 93 (D₅₀ = 500nm) | 7 (D₅₀ = 70nm) | 8.7 | 4.1 | 2.122 | 0.38 |
| Comparative Example 1 | 100 (D₅₀ = 500nm) | 0 | 8.2 | 4.2 | 1.952 | 0.26 |
| Comparative Example 2 | 100 (D₅₀ = 100nm) | 0 | 6.5 | 4.3 | 1.512 | 0.07 |

### Comparative Example 3

A separator was prepared in the same manner as in Example 1 except that a composition of the coating agent was prepared by mixing the first polymer solution, the inorganic dispersant and the solvent in a ratio of the first polymer solution:inorganic dispersant:solvent (acetone) = 1:1.5:3 without using the second polymer solution in (1) of Example 1.

### Comparative Example 4

A separator was prepared in the same manner as in Example 1 except that a PVdF homopolymer having a weight average molecular weight of 500,000 g/mol was used in (1) of Example 1.

### Experimental Example 1

### Measurement of thermal shrinkage of separator

Each of the separators prepared in Example 1 and Comparative Examples 3 and 4 was cut into a size of 5 cm × 5 cm to prepare three specimens. Each of the specimens was left in a chamber at 150°C for 1 hour, followed by measuring degrees of shrinkage of each specimen in MD and TD directions to calculate thermal shrinkage.

Measurement results of thermal shrinkage are shown in Table 2.

### Experimental Example 2

### Measurement of peel strength between coating layer and base film

Each of the coating layers prepared in Example 1 and Comparative Examples 3 and 4 was cut into 1.5 cm × 7 cm pieces to prepare three specimens. Each of the specimens were strongly attached to a glass plate using a transparent double-sided tape (3M), followed by measuring force for separating the coating layer using a tensile strength tester (UTM; Universal Test Machine).

Measurement results of peel strength are shown in Table 2.

### Experimental Example 3

### Measurement of adhesive strength between coating layer and electrode

Each of the separators prepared in Example 1 and Comparative Examples 3 and 4 was placed and bonded between both electrodes of a lithium rechargeable battery to prepare a battery stack of positive electrode/separator/negative electrode, which in turn was inserted into an aluminum pouch.

Then, with an electrolyte injected into the aluminum pouch, the aluminum pouch was sealed and formed into three single-plate cells, which in turn were subjected to a force of 980 N/cm² (100 kgf/cm²) for 20 seconds at 50°C and were left for 12 hours.

Next, after disassembling each of the single-plate cells, the battery stack of the positive electrode, the separator and the negative electrode bonded to each other was cut into a size of 1.5 cm (MD) × 7 cm (TD) and attached to a glass plate using a transparent double-sided tape (3M), followed by measuring adhesive strength between the coating layer and the electrodes of the separator using a tensile strength tester (UTM; Universal Test Machine).

Measurement results of adhesive strength are shown in Table 2.

**Table 2**

| Specimen | Thermal shrinkage of separator (%) | Peel strength between coating layer and base film (N/cm²) | Adhesive strength between coating layer and electrode (N/cm²) |
|---|---|---|---|
| Example 1 | 15 | 0.981 (100gf/cm²) | 0.4119 (42 gf/cm²) |
| Comparative Example 3 | 20 | 0.0981 (logf/cm²) | 0.0490 (5 gf/cm²) |
| Comparative Example 4 | 28 | 0.1961 (20gf/cm²) | 0.0785 (8 gf/cm²) |

As such, according to the present invention, the separator includes a coating layer, which is formed on a polyolefin porous separator using different types of inorganic particles having different average particle sizes have a high loading amount of a coating compositon and a high density in the coating layer and to provide excellent thermal conductivity by reducing porosity between the inorganic particles in the coating layer such that the inorganic particles are densely dispersed in the coating layer.

In addition, according to the present invention, the coating layer of the separator contains a polyvinylidene fluoride homopolymer having a weight average molecular weight of 1,000,000 g/mol or more and a polyvinylidene fluoride-hexafluoropropylene copolymer having a weight average molecular weight of 800,000 g/mol or less in a binder polymer, thereby providing excellent adhesive strength.

Further, according to the present invention, the coating layer of the separator has excellent adhesive strength and heat dissipation capability, and thus can be strongly adhered to the base film, thereby efficiently suppressing thermal shrinkage of the separator. When such a separator is applied to a battery, the battery can prevent short circuit of electrodes due to overheating of the battery, thereby improving operating stability and lifespan of the battery.

## Claims

1. A porous separator including a polyolefin porous base film, and a coating layer formed on one or both sides of the base film,
wherein the coating layer includes inorganic particles, and the inorganic particles include first inorganic particles having an average particle size ranging from 150 nm to 600 nm, and second inorganic particles having an average particle size ranging from 5 nm to 90 nm, and the first inorganic particles and the second inorganic particles are mixed in an weight ratio from 99: 1 to 93:7, and the binder polymer comprises,
a) a polyvinylidene fluoride homopolymer; and
b) a polyvinylidene fluoride-hexafluoropropylene copolymer; and
the separator has a thermal conductivity of 0.3 W/mk or more.

2. The porous separator according to claim 1, wherein the coating layer comprises,
a) 70 wt% to 90 wt% of the inorganic particles; and
b) 10 wt% to 30 wt% of a binder polymer.

3. The porous separator according to claims 1 or 2, wherein
- an average particle size of the first inorganic particles is about 500 nm, and an average particle size of the second inorganic particles is about 20 nm, and the first inorganic particles and the second inorganic particles are mixed in an weight ratio from 95: 5 to 99:1; or. wherein
- an average particle size of the first inorganic particles is about 500 nm, and an average particle size of the second inorganic particles is about 50 nm, and the first inorganic particles and the second inorganic particles are mixed in an weight ratio from 95: 5 to 97:3.

4. The porous separator according to claims 1 to 3, wherein the inorganic particles comprise alumina (Al₂O₃) particles.

5. The porous separator according to claims 1 to 4, wherein the polyolefin porous base film is selected from the group consisting of a polyethylene monolayer film, a polypropylene monolayer film, a polyethylene/polypropylene bilayer film, a polypropylene/polyethylene/polypropylene triple-layer film, and a polyethylene/polypropylene/polyethylene triple-layer film.

6. The porous separator according to claims 1 to 5, wherein the polyvinylidene fluoride homopolymer haves a weight average molecular weight of 1,000,000 g/mol or more and the a polyvinylidene fluoride-hexafluoropropylene copolymer haves a weight average molecular weight of 800,000 g/mol or less.

7. The porous separator according to any one of claims 1 to 6, wherein the separator having a coating composition loading amount of 5 g/m² to 10 g/m², and the coating layer has a thickness of 1 µm to 7 µm.

8. The porous separator according to any one of claims 1 to 7, wherein, the separator having a thermal shrinkage of 15% or less.

9. The porous separator according to any one of claims 1 to 8, an adhesive strength between the coating layer and electrodes is 0.098067 N/cm² (10 gf/cm²) or more.

10. The porous separator according to claims 1 to 9, wherein the battery is a lithium ion rechargeable battery.

11. The porous separator according to claims 1 to 10, wherein the electrodes comprises a positive electrode and a negative electrode, the positive electrode being selected from the group consisting of lithium cobalt oxide, lithium nickel cobalt manganese oxide, lithium manganese oxide, lithium iron phosphate and lithium nickel oxide electrodes; and the negative electrode being a crystalline or amorphous carbon electrode.

12. An electrochemical battery comprising a positive electrode, a negative electrode, a porous separator of claims 1 to 11 and an electrolyte,
wherein the separator includes a polyolefin porous base film, and a coating layer formed on one or both sides of the base film, wherein the coating layer includes inorganic particles, and the inorganic particles include first inorganic particles having an average particle size ranging from 150 nm to 600 nm, and second inorganic particles having an average particle size ranging from 5 nm to 90 nm, and the separator has a thermal conductivity of 0.3 W/mk or more.

13. The electrochemical battery according to claim 12, wherein the battery is a lithium rechargeable battery.

## Patentansprüche

1. Poröser Separator umfassend einen porösen Polyolefin-Basisfilm und eine auf einer oder beiden Seiten des Basisfilms ausgebildete Beschichtungsschicht,
wobei die Beschichtungsschicht anorganische Partikel umfasst und die anorganischen Partikel erste anorganische Partikel mit einer durchschnittlichen Partikelgröße im Bereich von 150 nm bis 600 nm und zweite anorganische Partikel mit einer durchschnittlichen Partikelgröße im Bereich von 5 nm bis 90 nm umfassen, und die ersten anorganischen Partikel und die zweiten anorganischen Partikel in einem Gewichtsverhältnis von 99:1 bis 93:7 gemischt sind, und das Bindemittelpolymer
a) ein Polyvinylidenfluorid-Homopolymer und
b) ein Polyvinylidenfluorid-Hexafluorpropylen-Copolymer umfasst und
der Separator eine Wärmeleitfähigkeit von 0,3 W/mK oder mehr hat.

2. Poröser Separator nach Anspruch 1, wobei die Beschichtungsschicht
a) 70 Gew.-% bis 90 Gew.-% der anorganischen Partikel und
b) 10 Gew.-% bis 30 Gew.-% eines Bindemittelpolymers umfasst.

3. Poröser Separator nach Anspruch 1 oder 2, wobei
- eine durchschnittliche Partikelgröße der ersten anorganischen Partikel ungefähr 500 nm und eine durchschnittliche Partikelgröße der zweiten anorganischen Partikel ungefähr 20 nm beträgt, und die ersten anorganischen Partikel und die zweiten anorganischen Partikel in einem Gewichtsverhältnis von 95:5 bis 99:1 gemischt sind; oder wobei
- eine durchschnittliche Partikelgröße der ersten anorganischen Partikel ungefähr 500 nm und eine durchschnittliche Partikelgröße der zweiten anorganischen Partikel ungefähr 50 nm beträgt, und die ersten anorganischen Partikel und die zweiten anorganischen Partikel in einem Gewichtsverhältnis von 95:5 bis 97:3 gemischt sind

4. Poröser Separator nach den Ansprüchen 1 bis 3, wobei die anorganischen Partikel Aluminiumoxid-Partikel (Al₂O₃) umfassen.

5. Poröser Separator nach Ansprüchen 1 bis 4, wobei der poröse Polyolefin-Basisfilm aus der Gruppe bestehend aus einem Polyethylen-Monoschichtfilm, einem Polypropylen-Monoschichtfilm, einem Polyethylen-Polypropylen-Doppelschichtfilm, einem Polypropylen-Polyethylen-Polypropylen-Dreischichtfilm und einem Polyethylen-Polypropylen-Polyethylen-Dreischichtfilm ausgewählt ist.

6. Poröser Separator nach den Ansprüchen 1 bis 5, wobei das Polyvinylidenfluorid-Homopolymer eine gewichtsmittlere Molmasse von 1.000.000 g/mol oder mehr und das Polyvinylidenfluorid-Hexafluorpropylen-Copolymer eine gewichtsmittlere Molmasse von 800.000 g/mol oder weniger aufweist.

7. Poröser Separator nach einem der Ansprüche 1 bis 6, wobei der Separator ein Flächengewicht der Beschichtungszusammensetzung von 5 g/m² bis 10 g/m² und die Beschichtungsschicht eine Dicke von 1 µm bis 7 µm hat.

8. Poröser Separator nach einem der Ansprüche 1 bis 7, wobei der Separator eine thermische Schwindung von 15 % oder weniger aufweist.

9. Poröser Separator nach einem der Ansprüche 1 bis 8, wobei eine Haftfestigkeit zwischen der Beschichtungsschicht und Elektroden 0,098067 N/cm² (10 gf/cm²) oder mehr beträgt.

10. Poröser Separator nach den Ansprüchen 1 bis 9, wobei die Batterie eine wiederaufladbare Lithium-Ionen-Batterie ist.

11. Poröser Separator nach einem der Ansprüche 1 bis 10, wobei die Elektroden eine positive Elektrode und eine negative Elektrode umfassen, die positive Elektrode aus der Gruppe bestehend aus Lithiumcobaltoxid-, Lithiumnickelcobaltmanganoxid-, Lithiummanganoxid-, Lithiumeisenphosphat- und Lithiumnickeloxid-Elektroden ausgewählt ist; und die negative Elektrode eine kristalline oder amorphe Kohlenstoffelektrode ist.

12. Elektrochemische Batterie aufweisend eine positive Elektrode, eine negative Elektrode, einen porösen Separator nach den Ansprüchen 1 bis 11 und einen Elektrolyten,
wobei der Separator einen porösen Polyolefin-Basisfilm und eine auf einer oder beiden Seiten des Basisfilms ausgebildete Beschichtungsschicht umfasst, wobei die Beschichtungsschicht anorganische Partikel umfasst und die anorganischen Partikel erste anorganische Partikel mit einer durchschnittlichen Partikelgröße im Bereich von 150 nm bis 600 nm und zweite anorganische Partikel mit einer durchschnittlichen Partikelgröße im Bereich von 5 nm bis 90 nm umfassen und der Separator eine Wärmeleitfähigkeit von 0,3 W/mK oder mehr hat.

13. Elektrochemische Batterie nach Anspruch 12, wobei die Batterie eine wiederaufladbare Lithiumbatterie ist.

## Revendications

1. Séparateur poreux comportant un film de base poreux en polyoléfine, et une couche de revêtement formée sur un côté du film de base ou les deux,
la couche de revêtement comportant des particules inorganiques, et les particules inorganiques comportant des premières particules inorganiques ayant une taille moyenne de particules allant de 150 nm à 600 nm, et des deuxièmes particules inorganiques ayant une taille moyenne de particules allant de 5 nm à 90 nm, et les premières particules inorganiques et les deuxièmes particules inorganiques étant mélangées dans un rapport pondéral de 99:1 à 93:7, et le polymère liant comprenant
a) un homopolymère de polyfluorure de vinylidène, et
b) un copolymère polyfluorure de vinylidènehexafluoropropylène ; et
le séparateur ayant une conductivité thermique d'au moins 0,3 W/mK.

2. Séparateur poreux selon la revendication 1, dans lequel la couche de revêtement comprend
a) 70 % en poids à 90 % en poids des particules inorganiques ; et
b) 10 % en poids à 30 % en poids d'un polymère liant.

3. Séparateur poreux selon la revendication 1 ou 2, dans lequel
- la taille moyenne de particules des premières particules inorganiques est d'environ 500 nm, et la taille moyenne de particules des deuxièmes particules inorganiques est d'environ 20 nm, et les premières particules inorganiques et les deuxièmes particules inorganiques sont mélangées dans un rapport pondéral de 95:5 à 99:1 ; ou dans lequel
- la taille moyenne de particules des premières particules inorganiques est d'environ 500 nm, et la taille moyenne de particules des deuxièmes particules inorganiques est d'environ 50 nm, et les premières particules inorganiques et les deuxièmes particules inorganiques sont mélangées dans un rapport pondéral de 95:5 à 97:3.

4. Séparateur poreux selon les revendications 1 à 3, dans lequel les particules inorganiques comprennent des particules d'alumine (Al₂O₃).

5. Séparateur poreux selon les revendications 1 à 4, dans lequel le film de base poreux en polyoléfine est choisi dans le groupe constitué par un film monocouche de polyéthylène, un film monocouche de polypropylène, un film bicouche de polyéthylène/polypropylène, un film tricouche de polypropylène/polyéthylène/polypropylène, et un film tricouche de polyéthylène/polypropylène/polyéthylène.

6. Séparateur poreux selon les revendications 1 à 5, dans lequel l'homopolymère de polyfluorure de vinylidène a un poids moléculaire moyen en poids de 1 000 000 g/mol ou plus et le copolymère polyfluorure de vinylidènehexafluoropropylène a un poids moléculaire moyen en poids de 800 000 g/mol ou moins.

7. Séparateur poreux selon l'une quelconque des revendications 1 à 6, le séparateur ayant une quantité de charge de composition de revêtement de 5 g/m² à 10 g/m², et la couche de revêtement ayant une épaisseur de 1 µm à 7 µm.

8. Séparateur poreux selon l'une quelconque des revendications 1 à 7, le séparateur ayant un retrait thermique de 15 % ou moins.

9. Séparateur poreux selon l'une quelconque des revendications 1 à 8, la résistance d'adhérence entre la couche de revêtement et des électrodes étant d'au moins 0,098067 N/cm² (10 gf/cm²) .

10. Séparateur poreux selon les revendications 1 à 9, la batterie étant une batterie au lithium-ion rechargeable.

11. Séparateur poreux selon les revendications 1 à 10, les électrodes comprenant une électrode positive et une électrode négative, l'électrode positive étant choisie dans le groupe constitué par les électrodes d'oxyde de lithium-cobalt, d'oxyde de lithium-nickel-cobalt-manganèse, d'oxyde de lithium-manganèse, de phosphate de lithium-fer et d'oxyde de lithium-nickel, et l'électrode négative étant une électrode au carbone cristallin ou amorphe.

12. Batterie électrochimique comprenant une électrode positive, une électrode négative, un séparateur poreux selon les revendications 1 à 11 et un électrolyte,
le séparateur comportant un film de base poreux en polyoléfine, et une couche de revêtement formée sur un côté du film de base ou les deux, la couche de revêtement comportant des particules inorganiques, et les particules inorganiques comportant des premières particules inorganiques ayant une taille moyenne de particules allant de 150 nm à 600 nm, et des deuxièmes particules inorganiques ayant une taille moyenne de particules allant de 5 nm à 90 nm, et le séparateur ayant une conductivité thermique d'au moins 0,3 W/mK.

13. Batterie électrochimique selon la revendication 12, la batterie étant une batterie rechargeable au lithium.
